## Europäisches Patentamt

## European Patent Office

## Office européen des brevets

(19)

(11) Veröffentlichungsnummer: **0 006 423**
**B1**

(12)

# EUROPÄISCHE PATENTSCHRIFT

(45) Veröffentlichungstag der Patentschrift:
02.09.81

(51) Int. Cl.³: **F 23 M 5/08**

(21) Anmeldenummer: 79101064.8

(22) Anmeldetag: 07.04.79

(54) **Vorrichtung zur Kühlung eines Kohlebrenners.**

(30) Priorität: 18.04.78 DE 2816760

(43) Veröffentlichungstag der Anmeldung:
09.01.80 Patentblatt 80/1

(45) Bekanntmachung des Hinweises auf die Patenterteilung:
02.09.81 Patentblatt 81/35

(84) Benannte Vertragsstaaten:
BE DE FR GB NL

(56) Entgegenhaltungen:
GB-A-289 930
GB-A-297 240
GB-A-783 253
GB-A-870 553
GB-A-893 739
US-A-2 222 756

(73) Patentinhaber: Ruhrkohle Aktiengesellschaft,
Rellinghauser Strasse 1, D-4300 Essen 1 (DE)

(72) Erfinder: Brücker, Werner, Dr. Ing., Pfalzstrasse 17 a,
Düsseldorf (DE)
Erfinder: Greulich, Horst Siegfried, Ing. grad.,
Bermaensfeld 195, Oberhausen (DE)
Erfinder: Jacobs, Jörn, Dr. Ing., Waldsaum 59, Essen (DE)
Erfinder: Schlütter, Alois, Dipl.-Ing., Rheinstrasse 42,
Kempen (DE)
Erfinder: Schmalfeld, Jörg, Dr. Ing., Merianstrasse 6,
D-6242 Kronberg (DE)

## Vorrichtung zur Kühlung eines Kohlebrenners

Die Erfindung betrifft eine Vorrichtung zur Kühlung eines Kohlebrenners mit einem luftgekühlten Hohlmantel, der mit einem die Luft in Längsrichtung des Hohlmantels hin- und zurückleitenden Führungsblech und/oder mit die Luft in eine spiralförmige Bewegungsbahn drängenden Leitblechen versehen ist, wobei die Leitblechspiralen gegenläufig beiderseits des Führungsbleches angeordnet sind und der Luftaustritt des Hohlmantels mit dem Lufteintritt des Brenners verbunden ist.

Aus der GB-A-783 253 ist ein Kohlebrenner mit keramischer Auskleidung und luftgekühltem Hohlmantel bekannt, in dem die Kühlluft mit Hilfe eines Führungsbleches in Längsrichtung hin- und hergehend geführt wird. Die keramische Auskleidung dient in erster Linie der Verminderung auftretenden Verschleißes. Der auftretende Verschleiß ist deshalb besonders gravierend, weil die als Verbrennungsluft in den Brenner eintretende, aus dem Hohlmantel gelangende Kühlluft mit Hilfe von Leitblechen in eine Drehbewegung versetzt wird. Dieser Brenner ist für schwer entflammbare Kohle, wie beispielsweise Anthrazitkohle, nicht geeignet.

Der Erfindung liegt die Aufgabe zugrunde, der Anwendungsbereich des bekannten Brenners auf schwer entflammbare Kohle, wie beispielsweise Anthrazitkohle, zu erweitern.

Das wird nach der Erfindung dadurch erreicht, daß der Brenner eine keramische Auskleidung mit einer mittleren Wärmekapazität von 0,2−0,3 kcal/kg und Grad Kelvin und eine Wärmeleitzahl zwischen 1 und 20 Watt/m und Grad Kelvin sowie eine Dicke von 10−50 mm aufweist und die Brennerkühlung bei einer Feuerraumbelastung von 0,3−0,7 MW/m³ zwischen 200 und 300 Watt/m² und Grad Kelvin beträgt.

Der Vorteil der beschriebenen Vorrichtung liegt in der besonderen Kühlung des Brenners, die den Brenner in einem Temperaturbereich hält, in dem die von ihm ausgehende Strahlungswärme ganz wesentlich zum Entflammen der eingesetzten Kohle beiträgt.

In der Zeichnung ist ein Ausführungsbeispiel der Erfindung dargestellt. Es zeigt

Fig. 1 eine schematische Gesamtansicht eines Brenners,

Fig. 2 und 3 Einzelheiten des Brenners nach Fig. 1,

Fig. 4 und 5 eine Kohlezuführung für den Brenner nach Fig. 1−3.

Der dargestellte Brenner besitzt eine Leistung von 5 MW.

Der Brenner besitzt einen zylindrischen, doppelwandigen Stahlmantel 1, dessen eines Ende 2 offen und dessen anderes Ende 3 geschlossen ist. Am oberen Ende 3 ist der doppelwandige Stahlmantel 1 mit zwei Stutzen 4 für die Zuführung von Kaltluft versehen. Die Kaltluft soll im Betriebsfall durch die Stutzen 4 in den Stahlmantel 1 eintreten und zunächst am äußeren Mantel 5 entlang bis zum unteren Ende 2 und dann am inneren Mantel 6 entlang zu einem Austrittsstutzen 7 strömen. Dabei verhindert ein Führungsblech 8 zwischen dem inneren Mantel 6 und dem äußeren Mantel 5 einen Kurzschlußstrom von den Stutzen 4 in den Austrittsstutzen 7. Neben dem Führungsblech 8 befinden sich noch Leitbleche 9 und 10 in dem doppelwandigen Stahlmantel 1. Das Leitblech 9 verläuft spiralförmig entlang der Innenseite des äußeren Mantels 5 und ist an dem Mantel 6 befestigt. Das Leitblech 10 verläuft gleichfalls spiralförmig, aber entlang der Innenseite des Führungsbleches 8. Das Leitblech 10 ist auch an dem Führungsblech 8 befestigt. Die Leitbleche 9 und 10 geben der durch den doppelwandigen Stahlmantel 1 strömenden Luft eine spiralförmige Strömung. Eine entgegengesetzte Steigung beider Leitbleche 9 und 10 erlaubt eine gleichbleibende Drallrichtung der Luftströmung zwischen dem äußeren Mantel 6 und dem Führungsblech 8 bzw. dem inneren Mantel 5 und dem Führungsblech 8. Eine Umkehrung der Drallrichtung wäre mit einem erheblichen Strömungsverlust verbunden. Die Leitbleche 9 und 10 bilden eingängige Spiralen, sie können aber auch als mehrgängige Spiralen ausgebildet sein.

Der Austrittsstutzen 7 resultiert aus einer Verlängerung des inneren Mantels 5 und des Führungsbleches 8 über das obere Ende 3 hinaus.

Der Stahlmantel bildet mit den Stutzen 4, den Mänteln 5 und 6, dem Austrittsstutzen 7, dem Führungsblech 8 und den Leitblechen 9 und 10 eine Schweißkonstruktion. Innen ist der Stahlmantel 1 mit einer keramischen Auskleidung 11 versehen. Der von der keramischen Auskleidung 11 umschlossene, bis auf das obere Ende zylindrische Hohlraum ist der erfindungsgemäße Flammenraum. Die keramische Auskleidung besteht teilweise aus Aluminiumoxyd bzw. Siliziumkarbit. Im Falle einer Verwendung von Siliziumkarbit beträgt der Anteil dieses Stoffes mindestens 20 und höchsten 95%. Anstelle der genannten Bestandteile können auch andere Bestandteile treten. Ferner kommt auch eine andere Auskleidung als eine keramische Auskleidung in Betracht. Jede Auskleidung muß aber eine mittlere Wärmekapazität von 0,2−0,3/ kcal/kg und Grad Kelvin bzw. 0,22 bis 0,35 Watt/kg und Grad Kelvin aufweisen. Im Ausführungsbeispiel liegt die Wärmekapazität bei 0,25 kcal/kg und Grad Kelvin. Die Wärmeleitzahl liegt zwischen einem und 20 Watt/m und Grad Kelvin. Bei gleichzeitiger Dicke der keramischen Auskleidung zwischen 10 und 50 mm und einer Kühlung des Brennermantels mit einer Leistung zwischen 200 und 300 Watt/m² und Grad Kelvin besitzt die Brennerwandung als Wärmeträger eine hohe Wärmekapazität und Wärmeleitfähigkeit, ohne daß die Gefahr eines Wärmestaues besteht.

Der sich aus dem Stahlmantel 1 und der keramischen Auskleidung 11 ergebende Brennerdurchmesser beträgt 1200 mm, gleichzeitig hat der Brenner eine Länge von 2000 mm. Dadurch ergibt sich ein Verhältnis der Brennerleistung von 0,5 MW pro m³ Flammenraum. Dieser Wert liegt innerhalb des zulässigen Bereiches von 0,3 bis 0,7 MW pro m³. Der Bereich kennzeichnet eine relativ geringe Feuerraumbelastung und hat ein stabiles Feuerungsverhalten zur Folge. Ein instabiles Feuerungsverhalten stellt sich mit einiger Sicherheit bei einer Belastung von 2 MW/m³ und mehr ein. Alle in diesem Zusammenhang genannten Feuerraumbelastungen sind auf 1 bar und 1 Stunde bezogen.

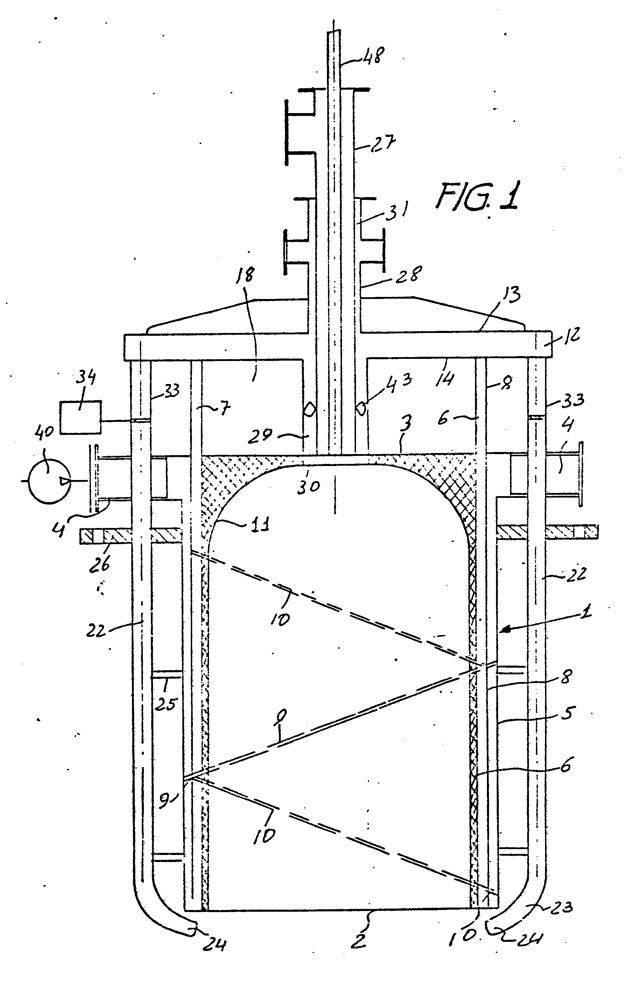

Nach Fig. 1 ist am oberen Ende 3 des Stahlmantels aus Herstellungsgründen eine runde Wölbung der keramischen Auskleidung 11 gewählt worden. Die keramische Auskleidung 11 wird mit Hilfe eines Formkernes in die aus Fig. 1 ersichtliche Form gebracht. Dabei hat der zur Auskleidung vorgesehene keramische Stoff zunächst eine bildsame Gestalt, d. h. wird der Stoff in Form eines Schlickers oder ähnlich, wie Formsand in den Hohlraum zwischen dem Formkern und dem Stahlmantel 1 gebracht bzw. der Formkern unter Verdrängung des vorher in den Stahlmantel 1 eingebrachten Stoffes gedrückt. Wesentlich ist, daß eine gleichmäßige Materialverteilung während des Formvorganges stattfindet. Die gleichmäßige Materialverteilung ergibt eine homogene Auskleidung 11. Die homogene Auskleidung gewährleistet hinsichtlich der Wärmeleistung und der Wärmespeicherung überall gleiche Bedingungen.

Das zunächst bildsame Material erfährt durch eine zumindest mit dem Brennerbetrieb stattfindende Aushärtung seine endgültige keramische Verfestigung.

Durch an dem inneren Mantel 5 befestigte Stifte oder Matten oder Drähte, um die sich bei der Formgebung der Auskleidung 11 das Material herumlegt, entsteht eine feste Verbindung zwischen dem Stahlmantel 1 und der keramischen Auskleidung 11. Dabei ergeben sich günstige Verhältnisse mit radial verlaufenden Stiften, die lediglich in axialer Richtung des zylindrischen Stahlmantels 1 eine feste Verbindung bewirken und in radialer Richtung in der keramischen Auskleidung 11 gleiten, so daß eine unterschiedliche Wärmedehnung zwischen der keramischen Auskleidung 11 und dem Stahlmantel 1 für die keramische Auskleidung 11 keine Spannungen bringt. Die Wärmedehnung in axialer Richtung des zylindrischen Stahlmantels 1 wird durch überlappende Trennfugen kompensiert.

Im Betriebsfall bewirkt die durch den Stahlmantel 1 strömende Kaltluft eine bestimmte Kühlung. Diese Kühlung kann auch mit Hilfe einer Wasserkühlung oder einer anderen Kühlung mit einem flüssigen Kühlmittel erreicht werden.

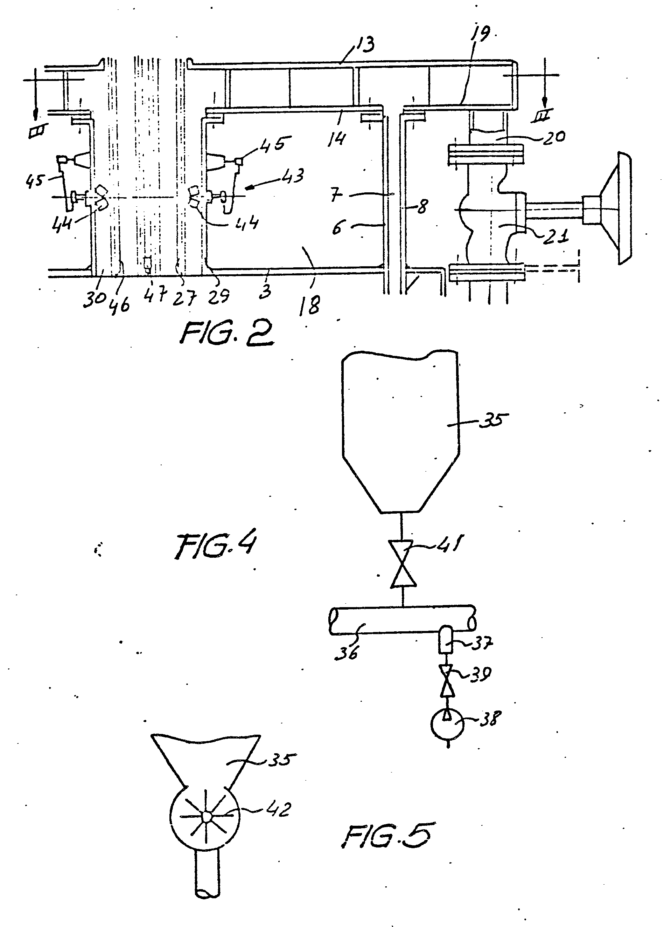

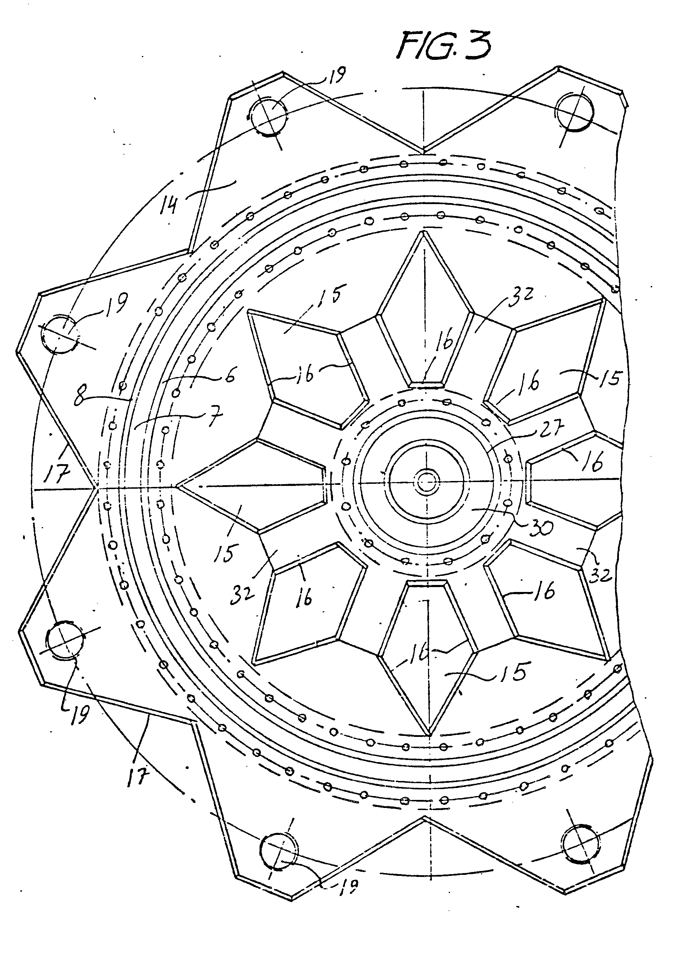

Die nach Durchströmen des Stahlmantels 1 aus dem Austrittsstutzen 7 austretende Luft gelangt in eine Verteilerdecke 12. Die Verteilerdecke 12 ist mit dem Austrittsstutzen 7 verschraubt und besteht aus zwei sternförmigen Blechen 13 und 14, von denen das untere in der Schnittdarstellung entlang der Schnittlinie III/III in Fig. 2 in Fig. 3 dargestellt ist. Die Bleche 13 und 14 besitzen innerhalb des von dem Austrittsstutzen 7 umschlossenen Bereiches eine Vielzahl gleichmäßig am Umfang verteilter Ausnehmungen 15. Am Rand der Ausnehmungen 15 ist der Zwischenraum zwischen den beiden Blechen 13 und 14 durch Stege 16 dicht verschlossen. Desgleichen ist der Zwischenraum zwischen den Blechen 13 und 14 an deren äußerem Rand durch Stege 17 dicht verschlossen. Die Bleche 13 und 14 bilden mit den Stegen 16 und 17 eine Schweißkonstruktion. Die Ausnehmungen 15 in der geschweißten Verteilerdecke 12 dienen dem Zugang des Zwischenraumes 18 zwischen der Verteilerdecke 12 und dem oberen Ende 3 des Stahlmantels 1. Statt der gewählten, rhombenähnlichen Form kann auch eine runde Form für die Ausnehmungen 15 gewählt werden. Die runde Form hat erhebliche Fertigungsvorteile. Das gleiche gilt für einen runden Rand der Verteilerdecke 12 statt des in Fig. 3 dargestellten sternförmigen Randes. Andererseits besitzt der sternförmige Rand Spitzen, die sich als Trichter nutzen lassen. Eine solche Nutzung ist nach Fig. 3 vorgesehen, da sich in jeder Spitze eine Durchtrittsbohrung 19 befindet, die den Innenraum der Verteilerdecke 12 mit einem angeschweißten Rohrstutzen 20 verbindet.

Jeder Rohrstutzen 20 setzt sich über ein zwischengeschaltetes Stellventil 21 in einer Rohrleitung 22 fort. Stellventile sind für Brenner mit variablem Betrieb vorgesehen. Bei konstantem Betrieb erfolgt die Luftverteilung durch festgelegte Strömungsquerschnitte. Alle Rohrleitungen 22 sind außen am Stahlmantel 1 entlanggeführt und besitzen an dem der Verteilerdecke 12 abgewandten vorderen Ende einen Krümmer 23, der in einer Düse 24 genau vor dem unteren Ende 2 des Stahlmantels 1 mündet. Die Düsen 24 sind unter dem Winkel von 70° zu Längsachse des Stahlmantels 1 radial gegen die Längsachse gerichtet. Der Winkel von 70° liegt innerhalb eines zulässigen Winkelbereiches von 60 bis 80°. Wenn die Düsen 24 genau auf die Längs- und Mittelachse des Stahlmantels 1 zeigen, ist der Winkel zwischen der Düsenmittelachse und dem durch die Mittel- und Längsachse des Stahlmantels 1 und die Düsenmitte gehenden Radius 0°. Im Bedarfsfall können die Düsen 24 aber auch an der Längs- und Mittelachse des Stahlmantels 1 vorbeizeigen. Dabei ist ein Winkel von 30° zwischen der Düsenmittelachse und dem die Düsenmitte schneidenden Radius noch zulässig. Die Rohrleitungen 22 sind durch Stege 25 und einen Brennerflansch 26, der zugleich den Stahlmantel 1 umschließt, am Stahlmantel 1 gehalten. Mit dem Brennerflansch 26 wird der Brenner an einem nicht dargestellten Kessel montiert. Dann ragt er mit seinem vorderen Ende 2 bis zum Brennerflansch 26 in den Feuerungsraum des Kessels. Im Unterschied zu anderen Brennern, herkömmliche Front- oder Deckenbrenner, deren Brennstoffeintritt im wesentlichen mit der Kesselwandung in einer Ebene liegt, besitzt der erfindungsgemäße Brenner innerhalb des Stahlmantels 1 und der keramischen Auskleidung 11 einen gegenüber dem übrigen Feuerungsraum des Kessels abgeschlossenen, geschützten Flammenraum oder Flammentunnel.

Bei dem Brenner nach Fig. 1 bis 3 wird der Brennstoff in Form eines Staub/Luft-Gemisches durch eine zentrische, am oberen Ende des Stahlmantels 1 mündende Rohrleitung 27 in den Flammenraum eingetragen. Die Rohrleitung 27 wird oberhalb der Verteilerdecke 12 im Abstand von einer weiteren, mit der Verteilerdecke 12 verschweißten Rohrleitung 28 umgeben. Unterhalb der Verteilerdecke 12 ist die Rohrleitung 27 in noch größerem Abstand von einer dritten, mit dem oberen Ende 3 des Stahlmantels 1 verschweißten Rohrleitung 29 umgeben. Zwischen den Rohrleitungen 27 und 29 besteht dadurch eine in den Flammenraum führende und mit der Verteilerdecke 12 verbundene Ringleitung 30. Oberhalb der Verteilerdecke 12 besteht gleichfalls eine mit 31 bezeichnete Ringleitung. Die Ringleitung 31 wird durch die Rohrleitungen 27 und 28 gebildet und ist wie die Ringleitung 30 mit der Verteilerdecke 12 verbunden. Das heißt, die aus dem Austrittsstutzen 7 austretende Luft wird durch die Verteilerdecke 12 in verschiedener Weise aufgeteilt. Sie gelangt in die in Düsen 24 mündenden Rohrleitungen 22, die Ringleitung 30 und die Ringleitung 31. Die Zuführung von Luft in die Ringleitungen 30 und 31 wird dadurch erleichtert, daß die Ausnehmungen 15 jeweils so in der Verteilerdecke angeordnet sind, daß die mit 32 bezeichneten Durchtrittsöffnungen zwischen zwei benachbarten Ausnehmungen 15 jeweils einer Durchtrittsbohrung 19 gegenüberliegen und die Stege 16 der Ausnehmungen 15 einen Trichter bilden. Es liegen sich dann die zu den Durchtrittsbohrungen 19 und den Durchtrittsöffnungen 32 gehörenden Trichter, wie in Fig. 3 dargestellt, jeweils genau gegenüber, so daß die aus dem Austrittsstutzen 7 austretende Luft optimal in die Durchtrittsbohrungen 19 und die Durchtrittsöffnungen 32 geleitet wird.

In der Verteilerdecke 12 findet eine Verteilung in bestimmten Verhältnissen statt. 10 bis 30% der am Austrittsstutzen 7 anfallenden Luftmenge gelangt in die Ringleitung 31, 25 bis 50% dieser Gesamtluftmenge gelangt in die zu den Düsen 24 führenden Rohrleitungen 22. Der Rest tritt durch die Ringleitung 30 in den Flammenraum ein. Diese Verteilung läßt sich durch Regelglieder in den verschiedenen Leitungen durch Klappen und/oder Ventile, wie sie beispielsweise mit den Stellventilen 21 vorgesehen sind, regeln. Der Regelbereich soll jedoch möglichst klein sein, um die mit großen Regelbereichen einhergehenden und aus konstruktiven Gründen resultierenden Strömungsverluste gering halten. Deshalb ist ein max. Regelbereich von 1 zu 2,5 vorgesehen. Außerdem soll die Regelung des Luftstromes nach Fig. 1 bis 3 möglichst in einem Leitungsbereich, an den Stellventilen 21 der Rohrleitungen 22, stattfinden. Die Regelung erfolgt nach Messung der Durchtrittsgeschwindigkeit in den Rohrleitungen 22. Dazu sind Meßblenden 33 in die Rohrleitungen 22 eingebaut. Die Meßblenden 33 stehen mit Anzeigevorrichtungen 34 in Wirkverbindung. Anhand der angezeigten Werte werden bei Abweichung von vorgegebenen Sollwerten die Stellventile 21 von Hand nachgeregelt. Im übrigen sollen die Stellventile wie alle anderen ggf. vorgesehenen Ventile und Klappen zur Luftregelung sowohl während des eigentlichen Brennerbetriebes als auch während des Anfahrtbetriebes konstant bleiben. Im Ausführungsbeispiel soll die Geschwindigkeit in den Rohrleitungen 22 bei Verbrennung von Anthrazitstaub in einer Menge von 600 kg/h 80 m/sek betragen. Diese Geschwindigkeit entspricht einem Luftmengenanteil von 35% an der Gesamtluftmenge. Bei einem Luftmengenanteil von 15% in der Ringleitung 31 und 50% in der Ringleitung 30 sind Luftgeschwindigkeiten von 15 m/sek in der Rohrleitung 27 und 50 m/sek in der Ringleitung 30 vorgesehen. Das liegt in den als vorteilhaft ermittelten Bereichen von 10 bis 20 m/sek in der Rohrleitung 27 und dem zwei- bis vierfachen dieser Geschwindigkeit in der Ringleitung 30 und dem fünf- bis siebenfachen dieser Geschwindigkeit in den Rohrleitungen 22. Die max. Luftgeschwindigkeit liegt damit etwa bei 100 m/sek.

Die Temperatur der in die Verteilerdecke 12 tretenden Luft liegt bei einem Brennerbetrieb dicht unterhalb der höchst zulässigen Brennertemperatur von 1350° C nach einer Eintrittstemperatur von 20° C in der Größenordnung von 400° C. Mit dieser Temperatur strömt die warme Luft durch die Ringleitung 31 in Rohrleitungen 36, die zu Bunkern 35 führen. Die Rohrleitungen 36 sind seitlich an der Rohrleitung 28 angeschweißten Flanschen befestigt. Die in die Rohrleitungen 36 strömende Luft ist als Primärluft zu bezeichnen. Dieser 400° C warmen Primärluft wird vor Erreichen jedes Bunkers 35 20° C warme Primärluft im Verhältnis 70 zu 30 beigemischt, wobei die 20° C warme Primärluft den größeren Anteil stellt. Die 20° warme Primärluft wird mit einem Gebläse 38 über ein Regelventil 39 und einen Stutzen 37 in die jeweilige Rohrleitung 36 geblasen. Mit dem Regelventil 39 wird der jeweils notwendige Kaltluftanteil eingestellt. Das Gebläse 38 gewährleistet eine ausreichende Luftversorgung. Das heißt, die Lufteinspeisung erfolgt zwangsweise ebenso wie in die Stutzen 4 des Stahlmantels 1. In Fig. 1 ist das dem Stutzen 4 zugehörende Gebläse 40 schematisch dargestellt. Wahlweise kann anstelle der verschiedenen Gebläse 38 und 40 auch ein gemeinsames Gebläse mit einer geeigneten, nachgeschalteten Luftverteilung eingesetzt werden.

Durch die Zuführung von niedrig temperierter

Luft in die Rohrleitung 36 wird die 400° C warme Primärluft so weit herabgekühlt, daß sie beim Zusammentreffen mit aus den Bunkern 35 über eine Regelvorrichtung 41 in die Rohrleitung 36 gelangendem Kohlenstaub eine unterhalb der Zündtemperatur des Kohlenstaubes liegende Temperatur erreicht hat. Diese Temperatur soll dicht oberhalb der gewünschten Eintrittstemperatur des Kohlestaub/Luftgemisches in die Rohrleitung 27 liegen. Das wird durch einen Wärmeverlust verhindernden geringen Abstand der Kohlebunker 35 von der Rohrleitung 27 und/oder durch eine Wärmedämmung der Rohrleitung 36 erreicht. Die Austrittstemperatur aus der in gleicher Weise an der Rohrleitung 28 befestigten Rohrleitung 36 bzw. die Eintrittstemperatur des Kohlestaub/Luftgemisches in die Rohrleitung 27 beträgt 160° C und liegt innerhalb des zulässigen Bereiches zwischen 100 und 200° C.

Die Regelvorrichtung 41 bewirkt die Dosierung des Brennstoffvorrates aus dem Tagesbunker in die Rohrleitung 36. Sie wird auf einen etwa 900 g/m³ entsprechenden Staubsättigungsgrad des Kohlestaub/Luftgemisches eingeregelt.

Zur gewünschten Kohlestaubbeimengung kann ggf. die Verwendung eines einfach Durchflußregelventils als Regelvorrichtung 41 ausreichen. Bei größeren Anforderungen an die Dosiergenauigkeit sind beispielsweise Zwangsförderer vorgesehen, die zwangsweise Kohlenstaubportionen aus einem Bunker 35 in die Rohrleitung 36 fördern. Eine solche Dosiervorrichtung kann ein Flügelrad 42 sein, das am unteren, trichterförmigen Ende eines Bunkers 35 montiert und entsprechend seiner einstellbaren Drehzahl zwischen seinen Flügeln genau vorbestimmte Portionen Kohlestaub nach unten in die Rohrleitung 36 fördert.

Das aus der Rohrleitung 27 in den Flammenraum austretende Kohlestaub/Luftgemisch wird von einem ringförmigen, aus der Ringleitung 30 austretenden und im folgenden als Sekundärluft bezeichneten Luftstrom umgeben. Die Sekundärluft ist wie die in die Ringleitung 31 strömende Luft 400° C war und wird mit einem Drallapparat 43 in eine spiralförmige Bewegungsbahn um den austretenden Kohlestaub/Luftstrom versetzt. Der Drallapparat 43 besteht aus einer Anzahl gleichmäßig in der Ringleitung 30 verteilt angeordneter, schwenkbar in den Rohrleitungen 27 und 29 gelagerten Leitblechen 44 und einer Arretierung 45. Die Leitbleche 44 haben eine dem ringförmigen Querschnitt der Ringleitung 30 angepaßte Form und können derart verschwenkt werden, daß die Sekundärluft in der Ringleitung 33 je nach Einstellung eine Verdrallung von 10° bis 80° erfährt. Dabei ist es vorteilhaft, einen möglichst kleinen Regelbereich für die Leitbleche 44 zu wählen, damit die Leitbleche 44 die Ringleitung 30 möglichst schließend ausfüllen.

Die Arretierung 45 erfolgt beispielsweise mit drehbeweglich an der Rohrleitung 29 angeordneten Stangen, die in eine jeweils in eine bestimmte Arretierungsstellung gelangende Bohrung einer Vielzahl von Bohrungen eines auf jeder Leitblechwelle sitzenden Bundes gesteckt werden. Das geschieht von Hand durch die Ausnehmungen 15 in der Verteilerdecke 12 hindurch. Um trotz der während des Betriebes auftretenden Wärme und Verbrennungsgefahr eine Verstellung des Drallapparates 43 zu bewirken, können die Leitblechwellen wahlweise auch mit Kettenrädern versehen sein, die dann mit einem Kettentrieb durch die Ausnehmungen 15 hindurch von einer ungefährlichen Stelle aus verstellt werden. Anstelle des Kettentriebes kommen auch andere mechanische Getriebe in Betracht.

Ferner können statt des Drallapparates 43 eine Anzahl spiralförmig um die Rohrleitung 27 herum angeordneter Düsen zum Einsatz gelangen.

Der aus der Rohrleitung 27 austretende Kohlenstaub/Luftstrom, der zusätzlich durch gleichmäßig verteilt an der Innenseite der Rohrleitung 27 angeordnete und in Rohrlängsrichtung verlaufende Leitbleche 46 gerichtet ist, ist gradlinig und drallfrei. Dagegen bewegt sich der aus der Ringleitung 30 austretende Sekundärluftstrom entsprechend der Einstellung des Drallapparates mit einer mehr oder weniger großen Verdrallung. Betrachtet man den Sekundärluftstrom und den Kohlestaub/Luftstrom als Gesamtstrom, so beträgt der verdrallte Anteil mindestens 30% und höchsten 90%. Diese Verdrallung kann auch in anderer Weise, z. B. ohne Verdrallung des Sekundärluftstromes durch Verdrallung des Kohlestaub/Luftgemisches herbeigeführt werden. Bei der im Ausführungsbeispiel gewählten Lösung ergeben sich jedoch besonders günstige Verhältnisse. Durch die verdrallte Sekundärluft werden die leichteren Partikel des Kohlestaub/Luftstromes gleichfalls in eine stark spiralförmige Bahn gebracht, während der Einfluß auf die schweren Kohlestaubpartikel geringer ist. Die leichteren Kohlestaubpartikel werden bei ihrer stark spiralförmigen Bahn infolge der wirksam werdenden Zentrifugalkraft nach außen in die Nähe der keramischen Auskleidung 11 gebracht. In der Nähe der keramischen Auskleidung 11 sind die Kohlestaubpartikel besonders stark der Wärme ausgesetzt, die sich dort während des Verbrennungsvorganges gesammelt hat. Das fördert ein Entflammen der Kohlestaubpartikel, wenn die Flamme von dem Brennstoffeintritt in den Flammenraum abgerissen ist. Diese Wirkung ergänzt sich mit der aus der längeren Verweilzeit brennender Kohlestaubpartikel in dem Flammenraum resultierenden Wirkung und der Vorwärmung der Kohle. Infolge der längeren Verweilzeit besteht einige Sicherheit, daß die Flamme in dem Flammenraum des Stahlmantels 1 und der Auskleidung 11 nicht ganz erlischt, wenn es zu einem Abreißen der Flamme von dem Brennstoffeintritt kommt. Ein solches Abreißen kann beispielsweise durch eine Störung des Brennstoffzuflusses verursacht werden. Dann schlägt die sich noch in dem Flammenraum befindende Restflamme auf den Brennstoffeintritt zurück. Die vorteilhafte Wirkung der Verweilzeit nimmt mit der Dauer zu. Die Dauer der Verweilzeit hängt von dem Drallwinkel des Sekundärstromes ab. Andererseits verursacht ein starker Drallwinkel einen erheblichen Strömungsverlust. Daher ist die Verweilzeit mit den sich aus den Strömungsverlusten ergebenden Nachteilen zu optimieren.

Neben der Verweilzeit und der Wärmewirkung der Auskleidung, die im Hinblick auf die Einhaltung der Betriebstemperatur von etwa 1350°C ein bestimmtes Maß nicht überschreiten darf und deshalb mit einer zwischen 200 und 300 Watt pro m² und Grad Kelvin liegenden Kühlleistung mit der durch den Stahlmantel 1 strömenden Kaltluft gekühlt wird, trägt die durch die warme Primärluft bewirkte gleichmäßige Vorwärmung des Brennstoffes dadurch zur Verbrennung bei, daß lediglich noch eine relativ geringe Erwärmung erforderlich ist, um der Kohle die Zündtemperatur zu geben.

In dem Flammenraum findet die erste Stufe eines zweistufigen Verbrennungsvorganges statt. Diese erste Stufe ist durch Einstellung der Sekundärluft und Primärluft bzw. des zugeführten Kohlestaub/Luftgemisches, sowie durch die Verdrallung der Sekundärluft festgelegt. Das heißt die Verdrallung und die Verweilzeit sind dieser Verbrennungsstufe anzupassen. In der ersten Verbrennungsstufe soll bis zum Austritt des Stahlmantels 1 und der Auskleidung 11 ein Ausbrand von = 0,4 − 0,8 stattfinden. = 1 würde einer 100%igen Verbrennung entsprechen. Im Ausführungsbeispiel ist ein Ausbrand an der oberen, zulässigen Grenze gewählt. Dieser Ausbrand wird durch eine unterstöchiometrische Verbrennung erreicht. Im Falle einer solchen Verbrennung wird nicht der entsprechende dem Molekularverhältnis des Brennstoffes notwendige Sauerstoff beigebracht. Dadurch tritt eine unvollständige Verbrennung ein, denn die Kohlestaubpartikel verbrennen nicht nacheinander, sondern alle gleichmäßig. Es entsteht eine verzögerte Verbrennung, die eine Stickoxydbildung ($NO_x$) unterdrückt.

In der ersten Verbrennungsstufe tritt infolge der 1350°C nicht überschreitenden Verbrennungstemperatur keine flüssige Schmelze auf. Es findet ein trockener Verbrennungsvorgang statt. Die teilweise verbrannten Kohlestaubpartikel sind weich. Die teilweise ausgebrannten, weichen Kohlepartikel verursachen gegenüber geschmolzenen und erstarrten Schlackenpartikeln eine sehr viel geringere Erosion an der Auskleidung des Brenners.

In der zweiten Stufe wird außerhalb des von dem Stahlmantel 1 und der Auskleidung 11 umschlossenen Raumes durch die Rohrleitungen 22 Tertiärluft zugeführt. Mit der Tertiärluft soll eine überstöchiometrische Verbrennung stattfinden, d. h. es soll ein Luftüberschuß erzeugt werden. Bei diesem Luftüberschuß ist eine wirtschaftliche Optimierung zwischen dem minimal zur vollständigen Verbrennung der Kohlepartikel notwendigen Luftstrom und einer vorteilhaften Wirkung eines starken Luftüberschusses bei einer nachfolgenden Wärmegewinnung durch in den Abgasstrom geschaltete Wärmetauscher zu treffen. Während ein Übermaß an Rauchgas die Wärmegewinnung mit den nachgeschalteten Wärmetauschern erleichtert, erschwert sich die Bereitstellung der zur Erzeugung der gewünschten Rauchgasmenge notwendige Luftmenge mit größer werdender Menge. Diese Erschwernisse resultieren u. a. aus den mit zunehmender Strömungsgeschwindigkeit überproportional wachsenden Strömungswiderständen. Das gilt insbesondere für die Strömungsverhältnisse in dem Stahlmantel 1, die u. a. durch die Durchflußquerschnitte und das durch die Steigung der Leitfläche 9 und 10 bestimmte Maß der Luftumlenkung bestimmt werden, wobei zu berücksichtigen ist, daß die Luft mit abnehmender Steigung bei gleichbleibender Strömungsgeschwindigkeit eine längere Verweilzeit in dem Stahlmantel 1 hat und dadurch eine zunehmende Erwärmung erfährt. Im übrigen dienen die Leitbleche dazu, der Luft eine Zwangsführung zu allen Umfangsstellen des Stahlmantels zu geben, um punktuelle oder streifenförmige Überhitzungen zu verhindern.

Mit Hilfe der Düsen 24 und eines ggf. unterschiedlich gestalteten Tertiärluftstromes kann die Flamme vor dem Stahlmantel 1 in beliebiger Weise der Geometrie des zugehörenden Kessels angepaßt werden. Anpassung heißt beispielsweise Verlängerung oder Verbreiterung oder Umlenkung.

Sofern die Düsen 24 an der Längs- und Mittelachse des Stahlmantels 1 vorbeizeigen, ist vorgesehen, daß die austretende Tertiärluft in Bewegungsrichtung und nicht entgegen der Bewegungsrichtung des aus dem Stahlmantel 1 austretenden, spiralförmig umlaufenden Staub/Luftgemisches in dieses eintritt. Damit wird eine Vernichtung von Bewegungsenergie vermieden. Gleichwohl findet eine zur vollständigen Verbrennung der Kohlepartikel ausreichende Vermischung mit dem Tertiärluftstrom statt.

Im Ausführungsbeispiel wird Anthrazitstaub in einer Menge von 600 kg/Stunde eingesetzt. Der Anthrazitstaub hat einen Heizwert von 30 000 GJ/kg. Seine Mahlfeinheit ist zu 95% kleiner als 0,02 mm. Das ist weit unterhalb des zulässigen Bereiches von 0,05 mm. Der Anteil flüchtiger Bestandteile des Anthrazitstaubes ist 8% in rohem Zustand. Der Wassergehalt ist 1%, gleichfalls bezogen auf den Rohzustand und damit halb so groß wie der zulässige Wassergehalt. Der Aschegehalt beträgt 15%. Damit handelt es sich um übliche, reaktionsträge Anthrazitkohle, deren Zündtemperatur in Abhängigkeit vom Anteil flüchtiger Bestandteile bei ca. 400°C liegt. Statt der Anthrazitkohle können auch beliebige andere Magerkohlen eingesetzt werden, deren Stoffwerte dem Anthrazit entsprechend angepaßt wurden.

Zum Inbetriebsetzen des Brenners mit der vorgesehenen Anthrazitkohle wird ein Zündbrenner 47 durch ein zentrisch in der Rohrleitung 27 angeordnetes Rohr 48 in den Flammenraum geschoben. Der Zündbrenner ist als Öl- oder Gasbrenner ausgebildet und besitzt eine Zündleistung von 10% der Brennerleistung. Mit dem Zündbrenner 47 wird nach ausreichender Vorwärmung des Brenners das austretende Kohlestaub/Luftgemisch gezündet. Beim Zünden wird die Zuteileinrichtung, d. h. die Brennstoffdosierung, bis an die stöchiometrischen Bedingungen im Sekundärbereich, also in der zweiten Verbrennungsstufe, nachgeregelt. Das Hochfahren des Brenners kann dann vorteilhafterweise mit der gleichen Luftmengenverteilung wie beim Dauerbetrieb erfolgen. Es erleichtert die Brennerführung wesentlich. Teillast wird über die Kohlestaubdosierung und die Tertiärluftregelung gefahren.

In dieser Weise wird der Brenner auch betrieben, wenn statt Anthrazitkohle mit einem flüchtigen Gehalt von weniger als 10% Koks eingesetzt wird. Der Betrieb mit Koks ist sorgar insofern leichter, als Staub mit größeren Partikeln bis zu 0,15 mm eingesetzt werden kann.

Er kann sowohl als Decken- wie auch als Frontbrenner eingesetzt werden. Durch die mögliche Einflußnahme auf die Flammengeometrie bietet sich der erfindungsgemäße Brenner insbesondere für kurze Brennkammern an. Ferner ist der erfindungsgemäße Brenner durch seine Eigenkühlung auch in ungekühlten Brennkammern einsetzbar und eignet er sich in besonderer Weise für eine Baukastenbauweise.

## Patentanspruch

Vorrichtung zur Kühlung eines Kohlebrenners mit einem luftgekühlten Hohlmantel (1), der mit einem die Luft in Längsrichtung des Hohlmantels hin- und zurückleitenden Führungsblech (8) und/oder mit die Luft in eine spiralförmige Bewegungsbahn bringenden Leitblechen (9, 10) versehen ist, wobei die Leitspiralen gegenläufig beiderseits des Führungsbleches angeordnet sind und der Luftaustritt des Hohlmantels mit dem Lufteintritt (30) des Brenners verbunden ist; dadurch gekennzeichnet, daß der Brenner eine keramische Auskleidung (11) mit einer mittleren Wärmekapazität von 0,2–0,3 kcal/kg und Grad Kelvin und eine Wärmeleitzahl zwischen 1 und 20 Watt/m und Grad Kelvin sowie eine Dicke von 10–50 mm aufweist und die Brennerkühlung bei einer Feuerraumbelastung von 0,3–0,7 MW/m³ zwischen 200 und 300 Watt/m² und Grad Kelvin beträgt.

## Claim

Device for cooling a coal burner with an air-cooled hollow casing (1), which is provided with a guide plate (8) directing the air to and fro in the longitudinal direction of the hollow casing and/or with deflecting plates (9, 10) directing the air into a spiral path, the deflecting spirals being arranged of opposite hand on the two sides of the guide plate and the air outlet from the hollow casing being connected with the air inlet (30) of the burner; characterised in that the burner has a ceramic cladding (11) with a mean thermal capacity of 0.2–0.3 kcal/kg and degree Kelvin and a thickness of 10–50 mm and the burner cooling amounts to between 200 and 300 Watts/m² and degree Kelvin, with a firebox load of 0.3–0.7 MW/m³.

## Revendication

Dispositif de refroidissement d'un brûleur à charbon comprenant une enveloppe creuse (1) refroidie par de l'air qui est pourvue d'une tôle de guidage (8) qui amène l'air dans la direction longitudinale de l'enveloppe creuse suivant un mouvement d'aller et de retour et/ou de tôles de guidage (9, 10) qui amènent l'air suivant une voie de déplacement spiralée, les spirales de guidage étant agencées en sens opposés des deux côtés de la tôle de guidage et la sortie d'air de l'enveloppe creuse étant reliée à l'entrée d'air (30) du brûleur, caractérisé en ce que le brûleur présente un revêtement céramique (11) ayant une capacité calorifique moyenne de 0,2–0,3 kcal/kg et degré Kelvin et une conductivité thermique entre 1 et 20 watts/mètre et degré Kelvin ainsi qu'une épaisseur de 10–50 mm et en ce que le refroidissement du brûleur est, pour une charge de la chambre de flamme de 0,3–0,7 MW/m³, compris entre 200 et 300 watts/m² et degré Kelvin.

FIG. 1

FIG. 2

FIG. 4

FIG. 5

FIG. 3